# EUROPÄISCHE PATENTSCHRIFT

(11) **EP 3 139 235 B1**
(45) Veröffentlichungstag und Bekanntmachung des Hinweises auf die Patenterteilung: **24.11.2021**
(21) Anmeldenummer: 16175644.0
(22) Anmeldetag: 22.06.2016
(51) Int. Cl.: G05D 1/02, G06Q 50/02, A01B 79/00, A01B 69/04

(54) **VERFAHREN ZUM BETREIBEN VON LANDWIRTSCHAFTLICHEN ARBEITSMASCHINEN**
METHOD FOR OPERATING AGRICULTURAL WORKING MACHINES
PROCÉDÉ D'EXPLOITATION DE MACHINES AGRICOLES

(30) Priorität: 01.09.2015 DE 102015114568
(43) Veröffentlichungstag der Anmeldung: 08.03.2017
(73) Patentinhaber: CLAAS Selbstfahrende Erntemaschinen GmbH, 33428 Harsewinkel (DE)
(72) Erfinder: Schäperkötter, Christian, 33824 Werther (DE)
(74) Vertreter: CLAAS Gruppe

(56) Entgegenhaltungen:
- EP-A1- 1 839 479
- EP-A1- 2 804 139
- WO-A1-2015/033968
- DE-A1- 4 322 293
- US-A1- 2012 215 381

## Beschreibung

Die Erfindung betrifft ein Verfahren zum Betreiben von landwirtschaftlichen Arbeitsmaschinen gemäß Anspruch 1.

Für den optimalen Betrieb von landwirtschaftlichen Arbeitsmaschinen, worunter insbesondere ein wirtschaftlich effizienter Betrieb verstanden werden kann, ist die richtige Einstellung einer Vielzahl von Betriebsparametern der jeweiligen landwirtschaftlichen Arbeitsmaschine für ihre jeweilige Bearbeitung erforderlich. Diese Betriebsparameter betreffen sowohl die landwirtschaftliche Arbeitsmaschine insgesamt, z. B. eine Fahrgeschwindigkeit, als auch die einzelnen Arbeitsorgane der landwirtschaftlichen Arbeitsmaschine, welche je nach Typ der landwirtschaftlichen Arbeitsmaschine in unterschiedlicher Art und Anzahl vorhanden sind. Dabei ist die Wahl geeigneter Betriebsparameter auch von der Umgebung der Arbeitsmaschine abhängig, so etwa von der Beschaffenheit des jeweiligen Feldes oder von den vorherrschenden Witterungsbedingungen.

Es sind verschiedene Ansätze zur Bestimmung geeigneter Betriebsparameter zur Einstellung der Bearbeitung aus dem Stand der Technik bekannt. So beschreibt die hier als nächstkommend angesehene Offenlegungsschrift DE 10 2005 031 426 A1 einen Ansatz, bei dem für eine ganze Flotte von im Prinzip gleichen Arbeitsmaschinen über statistische Auswertungen verschiedener Größen geeignete Betriebsparameter zur Einstellung der Bearbeitung ermittelt werden. Die Druckschrift DE 43 22 293 A1 offenbart ein Verfahren zur automatischen Steuerung von landwirtschaftlichen Maschinen. Die Druckschrift EP 2 804 139 A1 offenbart ein Serversystem zur Verwaltung von Arbeitssequenzen für landwirtschaftliche Arbeitsmaschinen. Sowohl diesen wie auch anderen aus dem Stand der Technik bekannten Ansätzen ist jedoch gemein, dass sie die Optimierung eines einzelnen Typs von Arbeitsmaschine isoliert betrachten. Es gibt aber auch Arbeitsmaschinen verschiedenen Typs, deren jeweilige Bearbeitung des Feldes derart zusammenhängt, dass eine isolierte Betrachtung der jeweiligen Einstellung von Betriebsparameter eines einzelnen Typs von Arbeitsmaschinen nicht zu einem insgesamt wirtschaftlich optimalen Ergebnis führt. Die landwirtschaftlichen Arbeitsmaschinen können hierbei anhand der durch sie vorgesehenen Bearbeitungsart in "Typen" unterteilt werden. Insbesondere kann in einem solchen Szenario dann jede Änderung an den Betriebsparametern einer Arbeitsmaschine eines Typs zu unterschiedlich umfangreichen Änderungen an den Betriebsparametern einer anderen Arbeitsmaschine eines weiteren Typs führen.

Ausgehend von diesem Stand der Technik besteht die Aufgabe der Erfindung also darin, ein Verfahren zum Betreiben von landwirtschaftlichen Arbeitsmaschinen bereitzustellen, bei dem auch die Abhängigkeit der Einstellung zwischen verschiedenen Arten von Arbeitsmaschinen bei einer zusammenhängenden Bearbeitung eines Feldes berücksichtigt wird.

Das obige Problem wird bei einem Verfahren zum Betreiben von landwirtschaftlichen Arbeitsmaschinen mit den Merkmalen des Anspruchs 1 durch die Merkmale des kennzeichnenden Teils von Anspruch 1 gelöst.

Wesentlich für die Erfindung ist die Erkenntnis, dass sinnvollerweise für landwirtschaftliche Arbeitsmaschinen verschiedenen Typs einer Arbeitsgruppe von Arbeitsmaschinen bereits aufeinander abgestimmte Datensätze zur Einstellung der jeweiligen Bearbeitung - hier und nachfolgend auch als "Dienstdatensätze" bezeichnet - auf einem zentralen Server bereitgestellt werden können. Auf diese Weise wird vermieden, dass jeweils für die einzelne Arbeitsmaschine "optimierte", für das Zusammenspiel der Arbeitsmaschinen aber nicht optimale Einstellungen kombiniert werden. Vielmehr kann auf bereits abgestimmte Kombinationen von solchen Einstellungen zurückgegriffen werden, welche dann eine Optimierung der Bearbeitung durch die Arbeitsgruppe insgesamt bieten. Letztendlich ist es auch die Betrachtung der Gesamtbearbeitung durch alle Arbeitsmaschinen auf einem Feld, welche für die wirtschaftliche Bewertung ausschlaggebend ist. Das Bereitstellen derartiger Kombinationen ist deshalb besonders vorteilhaft, weil gerade die Ermittlung von für den Prozess insgesamt optimalen Einstellungen bei einer zusammenhängenden Bearbeitung mit mehreren Arbeitsmaschinen insbesondere durch die sehr große Zahl an möglichen Kombinationen von Einstellungen sehr aufwändig und ad hoc kaum zu bewältigen ist.

Die bevorzugte Ausgestaltung des Unteranspruchs 2 betrifft den Fall, dass die Arbeitsmaschinen nicht nur für unterschiedliche Bearbeitungsarten vorgesehen sind, sondern zu diesem Zweck auch unterschiedliche Arbeitsorgane aufweisen.

Hierauf aufbauend sieht der Unteranspruch 3 vor, dass die obigen Datensätze zur Einstellung der Arbeitsorgane auf entsprechenden Steuervorrichtungen abgespeichert werden.

Neben Betriebsparametern können solche Datensätze auch ganze ablauffähige Datenverarbeitungsprogramme - z. B. in der Art von Apps - umfassen, wie der Unteranspruch 4 beschreibt.

Gemäß den bevorzugten Ausgestaltungen der Unteransprüche 5 und 6 ist eine automatische Übertragung ausgewählter Datensätze sowie die Berücksichtigung einer vorgegebenen Gültigkeitsdauer der Datensätze vorgesehen. Auf diese Weise können z. B. nutzungsbasierte Abrechnungsmodelle für die Datensätze umgesetzt werden.

Die Unteransprüche 7 und 10 betreffen bevorzugte Varianten, bei der eine den jeweiligen Arbeitsmaschinen zugeordnete Bedienvorrichtung vorgesehen ist, welche sowohl eine Benutzerschnittstelle für die Datensätze als auch eine Kommunikationsmöglichkeit innerhalb der Arbeitsgruppe oder zum Server bereitstellen kann.

Schließlich beschreiben die Unteransprüche 11 bis 13 bevorzugte Ausführungsformen, bei denen die Arbeitsmaschinen der Arbeitsgruppe eine Prozesskette bilden. Dann können auch sich während der Bearbeitung ergebende Daten bei den Arbeitsmaschinen der jeweils vor- oder nachgelagerten Bearbeitungsstufe berücksichtigt werden, indem diese Daten ausgewertet und sie oder die Auswertungsergebnisse an die Arbeitsmaschinen der vor- bzw. nachgelagerten Bearbeitungsstufe übertragen werden. Dabei kann ein Algorithmus vorgesehen sein, welcher dann automatisch aus den Daten oder den Auswertungsergebnisse Einstellungsänderungen der vor- bzw. nachgelagerten Bearbeitungsart erzeugt.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig.1: eine schematische Draufsicht auf eine Arbeitsgruppe von landwirtschaftlichen Arbeitsmaschinen, welche gemäß einem Ausführungsbeispiel des vorschlagsgemäßen Verfahrens betrieben werden, mit einem zu bearbeitenden Feld und
- Fig. 2: eine schematische Darstellung der Arbeitsgruppe der Fig. 1 mit den jeweils zugeordneten Bedienvorrichtungen.

Das vorschlagsgemäße Verfahren dient dem Betreiben von landwirtschaftlichen Arbeitsmaschinen 1a-c. Grundsätzlich kann es sich bei diesen um beliebige landwirtschaftliche Arbeitsmaschinen 1a-c handeln. Im vorliegenden Ausführungsbeispiel handelt es sich um zwei Mähdrescher 2 und einen Traktor-Hänger 3.

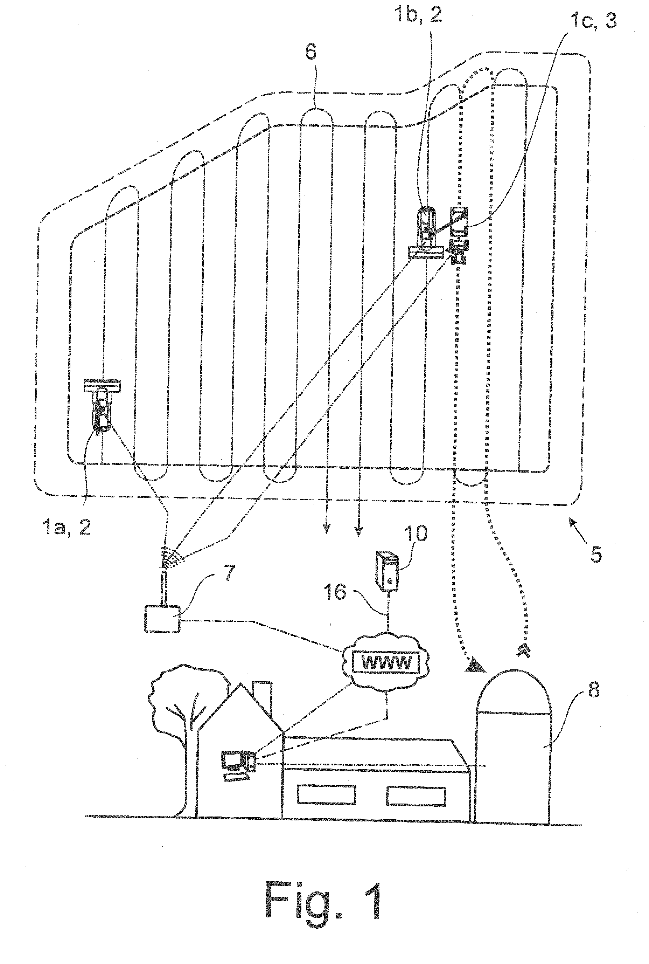

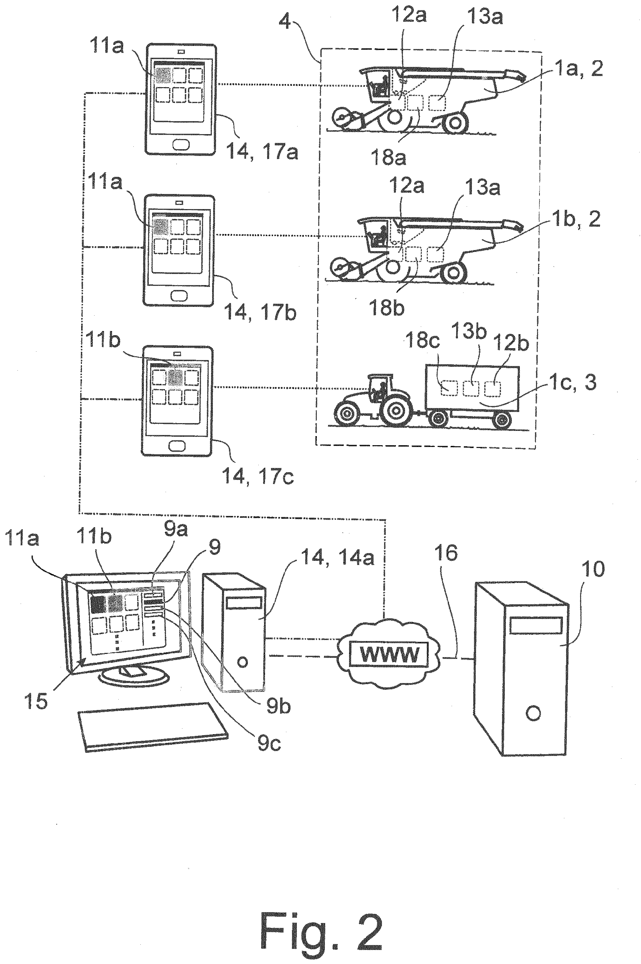

Gemäß dem vorschlagsgemäßen Verfahren wird eine Arbeitsgruppe 4 von landwirtschaftlichen Arbeitsmaschinen 1a-c zur zusammenhängenden Bearbeitung eines Feldes 5 definiert, welches Feld 5 mit entsprechenden Sollfahrspuren 6 in der Fig. 1 dargestellt ist. Die Definition der Arbeitsgruppe 4 als Zusammenfassung der entsprechenden Arbeitsmaschinen 1a-c ist in der Fig. 2 angedeutet. Unter einer solchen zusammenhängenden Bearbeitung ist zu verstehen, dass die Bearbeitung des Feldes 5 durch alle Arbeitsmaschinen 1a-c der Arbeitsgruppe 4 in einem funktionalen Zusammenhang steht und somit die Arbeitsmaschinen 1a-c nicht komplett unabhängig voneinander das Feld 5 bearbeiten. Hierfür werden nachfolgend noch Beispiele gegeben.

Vorschlagsgemäß weist die Arbeitsgruppe 4 eine erste Arbeitsmaschine 1a,b für eine erste Bearbeitungsart des Feldes 5 und eine zweite Arbeitsmaschine 1c für eine zweite Bearbeitungsart des Feldes 5 auf. Die Arbeitsgruppe 4 kann - wie vorliegend der Fall - auch mehr als eine erste Arbeitsmaschine 1a,b aufweisen, wobei hier speziell zwei vorgesehen sind. Gleiches gilt für die zweite Arbeitsmaschine 1c. Die beiden ersten Arbeitsmaschinen 1a,b werden von den Mähdreschern 2 gebildet, welche das Feld 5 abernten und somit für die erste Bearbeitungsart des "Aberntens" vorgesehen sind. Die zweite Arbeitsmaschine 1c - von dem Traktor-Hänger 3 gebildet - dient der Übernahme des Ernteguts von den Mähdreschern und dem Abtransport zu einem Silo 8 in einem Abstand zu dem Feld 5. Folglich handelt es sich bei der zweiten Bearbeitungsart um eine "Ernteübernahme". Es liegt auf der Hand, dass diese beiden Bearbeitungsarten miteinander zusammenhängen. Grundsätzlich sind beliebige weitere Bearbeitungsarten denkbar, wobei prinzipiell jedem Typ von landwirtschaftlicher Arbeitsmaschine eine eigene Bearbeitungsart - z. B. "Maisabernten", "Weizenabernten" etc. - zugewiesen werden kann oder etwa allen landwirtschaftlichen Arbeitsmaschinen für die Ernte die übergreifende Bearbeitungsart "Abernten" zugewiesen werden kann.

Eine weitere beispielhafte Variante für eine jeweilige erste Arbeitsmaschine 1a, b und eine zweite Arbeitsmaschine 1c wäre die Kombination Feldhäcksler - Traktor-Hänger. Ferner kann die zusammenhängende Bearbeitung auch eine dritte, vierte oder noch weitere Arbeitsmaschine umfassen. So könnte eine Ballenpresse nach der Bearbeitung durch den Mähdrescher 2 und den Traktor-Hänger 3 das abgelegte Stroh zu Ballen pressen, welche dann durch eine weitere Arbeitsmaschine abgeholt werden. Daran anschließend kann das Bereiten des Feldes 5 durch eine Egge oder das Ausbringen von Gülle auf das Feld 5 vorgesehen sein.

Vorschlagsgemäß ist ferner vorgesehen, dass ein Dienstdatensatz 9 zur Einstellung der Bearbeitung des Feldes 5 ausgewählt wird, wobei dieser Dienstdatensatz 9 vorschlagsgemäß auf einem von den Arbeitsmaschinen 1 entfernten Server 10 hinterlegt ist. Dabei wird vorschlagsgemäß ein erster Teildatensatz 11a des Dienstdatensatzes 9 zur Einstellung der ersten Bearbeitungsart an die erste Arbeitsmaschine 1a, b drahtlos übertragen. Vorschlagsgemäß wird ebenso ein zweiter Teildatensatz 11b des Dienstdatensatzes 9 zur Einstellung der zweiten Bearbeitungsart an die zweite Arbeitsmaschine 1c drahtlos übertragen. Bei dem Dienstdatensatz 9 kann es sich um im Prinzip beliebige Daten handeln, auf welchen basierend die Bearbeitung des Feldes 5 durch die Arbeitsmaschinen 1 beeinflusst werden kann, so etwa um Arbeitsparameter, welche hier synonym zu Betriebsparametern zu verstehen sind. Der Dienstdatensatz 9 kann dabei aus dem ersten Teildatensatz 11a und dem zweiten Teildatensatz 11b bestehen oder zusätzliche Teildatensätze aufweisen. Ferner kann der Dienstdatensatz 9 auch Informationen, z. B. zu seiner Darstellung oder Visualisierung umfassen, welche über die Einstellung der Bearbeitung des Feldes 5 im engeren Sinne hinausgehen. Die Übertragung des ersten Teildatensatzes 11a an die erste Arbeitsmaschine 1a,b und des zweiten Teildatensatzes 11b an die zweite Arbeitsmaschine 1c kann auch die Übertragung des gesamten Dienstdatensatzes 9 sowohl an die erste Arbeitsmaschine 1a,b als auch an die zweite Arbeitsmaschine 1c umfassen. Indem nun der erste Teildatensatz 11a und der zweite Teildatensatz 11b aufeinander abgestimmt sind, ist auch die jeweilige Einstellung der Bearbeitung durch die erste Arbeitsmaschine 1a,b und durch die zweite Arbeitsmaschine 1c aufeinander abgestimmt. Soweit die jeweilige Bearbeitungsart auch den Einsatz von Sensoren umfasst, kann die Einstellung der Bearbeitung die Einstellung solcher Sensoren und insbesondere deren Kalibrierung umfassen. Die drahtlose Übertragung kann dabei über ein Mobilfunknetzwerk 7 erfolgen, wobei drahtlose lokale Netzwerke (WLAN) oder andere drahtlose Kommunikationsprotokolle ebenfalls denkbar sind.

Bevorzugt ist, dass die erste Arbeitsmaschine 1a,b für die erste Bearbeitungsart ein erstes Arbeitsorgan 12a - hier ein jeweiliges Dreschwerk der Mähdrescher 2 - aufweist und dass der erste Teildatensatz erste Arbeitsparameter für das erste Arbeitsorgan 12a aufweist. Entsprechend ist vorgesehen, dass die zweite Arbeitsmaschine 1c für die zweite Bearbeitungsart ein zweites Arbeitsorgan 12b aufweist und dass der zweite Teildatensatz 11b zweite Arbeitsparameter für das zweite Arbeitsorgan 12b aufweist. Bei dem zweiten Arbeitsorgan 12b handelt es sich hier beispielhaft um eine Fördervorrichtung - speziell um einen Laderotor oder um Verteilwalzen - des Traktor-Hängers 3. Dabei besteht ganz grundsätzlich ein Zusammenhang zwischen der Einstellung eines solchen Dreschwerks des Mähdreschers 2 und der Einstellung einer Fördervorrichtung im Traktor-Hänger 3, dabei beide etwa prinzipiell abhängig von der Feuchtigkeit im Erntegut sind. Wie es bei diesem Ausführungsbeispiel der Fall ist, wird bevorzugt, dass die erste Bearbeitungsart verschieden zu der zweiten Bearbeitungsart ist.

Ebenso ist es bevorzugt, dass die erste Arbeitsmaschine 1a,b eine erste Steuervorrichtung 13a zur Ansteuerung des ersten Arbeitsorgans 12a und die zweite Arbeitsmaschine 1c eine zweite Steuervorrichtung 13b zur Ansteuerung des zweiten Arbeitsorgans 12b aufweist und dass der erste Teildatensatz 11a zumindest teilweise auf der ersten Steuervorrichtung 13a zur Ansteuerung des ersten Arbeitsorgans 12a und der zweite Teildatensatz 11b zumindest teilweise auf der zweiten Steuervorrichtung 13b zur Ansteuerung des zweiten Arbeitsorgans 12b abgespeichert wird. Das bietet sich einerseits dann an, wenn der erste Teildatensatz 11a bzw. der zweite Teildatensatz 11b Betriebsparameter umfasst, welche von der ersten Steuervorrichtung 13a bzw. der zweiten Steuervorrichtung 13b zur Einstellung der ersten bzw. zweiten Bearbeitungsart, ggf. auch zur Regelung des ersten Arbeitsorgans 12a bzw. des zweiten Arbeitsorgans 12b verwendet werden.

Neben dem Bereitstellen von Betriebsparametern kann der Dienstdatensatz 9 aber auch ganze ablauffähige Programme und damit Programmcode bereitstellen. Die Möglichkeiten zur Einflussnahme auf die Bearbeitung sind damit deutlich größer. Entsprechend ist es bevorzugt, dass der erste Teildatensatz 11a ein erstes ablauffähiges Datenverarbeitungsprogramm zur Einstellung der ersten Bearbeitungsart und dass der zweite Teildatensatz 11b ein zweites ablauffähiges Datenverarbeitungsprogramm zur Einstellung der zweiten Bearbeitungsart umfasst. Vorzugsweise ist das erste bzw. das zweite ablauffähige Datenverarbeitungsprogramm dabei für den Ablauf auf der ersten Steuervorrichtung 13a bzw. auf der zweiten Steuervorrichtung 13b vorgesehen.

Bezüglich des Servers 10 ist erfindungsgemäß vorgesehen, dass auf dem Server 10 eine Vielzahl von unterschiedlichen Dienstdatensätzen 9, 9a-c hinterlegt ist und dass der Server 10 für einen Client 14 einen virtuellen Arbeitsbereich 15 zur vorzugsweise internetbasierten Anzeige des ausgewählten Dienstdatensatzes 9 bereitstellt. Ein solcher Client 14 ist beispielsweise ein Betriebsrechner 14a eines landwirtschaftlichen Betriebs, welcher sowohl in der Fig.1 als auch in der Fig. 2 dargestellt ist. Es können aber auch andere Geräte einen solchen Client 14 bilden, wie untenstehend noch beschrieben wird. Grundsätzlich kann es also beliebig viele Clients 14 geben. In der Fig. 2 ist für einen solchen Betriebsrechner 14a die Anzeige des ausgewählten Dienstdatensatzes 9 sowie der weiteren, hier nicht ausgewählten Dienstdatensätze 9a-c im Arbeitsbereich 15 illustriert. Ebenso werden der erste Teildatensatz 11a und der zweite Teildatensatz 11b angezeigt. Vorzugsweise stellt der Server 10 für einen Client 14 einen insbesondere internetbasierten Zugang 16 zu dem virtuellen Arbeitsbereich 15 bereit, welcher Zugang 16 den Arbeitsmaschinen 1 der Arbeitsgruppe 4 zugeordnet ist. Das bedeutet, dass jedenfalls die Arbeitsmaschinen 1a-c der Arbeitsgruppe 4 für diesen Zugang autorisiert sind.

Gemäß einer erfindungsgemäßen Ausführungsform stellt der Server 10 für den Client 14 eine vorzugsweise internetbasierte Schnittstelle zur Definition der Arbeitsgruppe 4 und zur Auswahl des Dienstdatensatzes 9 bereitstellt. Dieses Bereitstellen kann auf analoge Weise zur Anzeige des Arbeitsbereichs 15 erfolgen, wobei diese Schnittstelle sowohl eine Ein- als auch eine Ausgabemöglichkeit seitens des Client 14 vorsieht.

Zur weiteren Automatisierung des Verfahrens ist bevorzugt vorgesehen, dass eine zyklische Überprüfung erfolgt, ob ein Dienstdatensatz 9 ausgewählt wurde und ein erster Teildatensatz 11a an eine erste Arbeitsmaschine 1a,b oder ein zweiter Teildatensatz 11b an eine zweite Arbeitsmaschine 1c zu übertragen ist und dass basierend auf der Überprüfung eine Übertragung des ersten Teildaten-satzes 11a oder des zweiten Teildatensatzes 11b erfolgt.

Speziell um unterschiedliche Abrechnungsansätze für die Benutzung des Dienstdatensatzes 9 vorsehen zu können, kann analog zu der obigen automatischen Prüfung auf Übertragung ebenso automatisch ein zeitliche Gültigkeitsbefristung des Dienstdatensatzes 9 implementiert werden. Hier ist bevorzugt vorgesehen, dass der Auswahl des Dienstdatensatzes 9 eine Gültigkeitsdauer zugeordnet ist und dass nach Ablauf der Gültigkeitsdauer der erste Teildatensatz 11a und der zweite Teildatensatz 11b des Dienstdatensatzes 9 inaktiv geschaltet wird. Das kann entweder ein Löschen des ersten Teildatensatzes 11a oder des zweiten Teildatensatzes 11b seitens der Arbeitsmaschine 1a-c oder lediglich eine funktionelle Deaktivierung bedeuten.

Gemäß einer weiteren bevorzugten Ausführungsform ist vorgesehen, dass den Arbeitsmaschinen 1a-c der Arbeitsgruppe 4 jeweils eine Bedienvorrichtung 17a-c zur Visualisierung eines an die Arbeitsmaschine 1a-c übertragenen Teildatensatzes 11a, b zugeordnet ist. Das ist in der Fig. 2 dargestellt. Vorzugsweise dienen die Bedienvorrichtungen 17a-c zur Visualisierung des Arbeitsbereiches 15 über den Zugang 16. Ebenso ist es bevorzugt, dass die Bedienvorrichtungen 17a-c mit einer Hauptrechenvorrichtung 18a-c der jeweiligen Arbeitsmaschine 1a-c und mit dem Server 10 datentechnisch verbunden sind, was ebenfalls in der Fig. 2 dargestellt ist. Eine solche Hauptrechenvorrichtung 18a-c kann eine fest installierte Elektronikeinheit, vorzugsweise ebenfalls mit Bedienfunktionalität, der Arbeitsmaschine 1a-c sein, welche etwa ihrerseits die erste Steuervorrichtung 13a bzw. die zweite Steuervorrichtung 13b ansteuert. Bei solchen Bedienvorrichtungen 17a-c, welche vorzugsweise tragbar sind, kann es sich um Geräte ähnlich zu einem PDA (personal digital assistant) oder einem Tablet-PC handeln.

Eine bevorzugte Weiterbildung ist dadurch gekennzeichnet, dass die Übertragung eines Teildatensatzes 11a, b - insbesondere eines ersten Teildatensatzes 11a oder eines zweiten Teildatensatzes 11b - an eine Arbeitsmaschine 1a-c - insbesondere an die erste Arbeitsmaschine 1a,b oder an die zweite Arbeitsmaschine 1c - der Arbeitsgruppe 4 eine Übertragung von dem Server 10 an die der jeweiligen Arbeitsmaschine 1a-c - insbesondere der ersten Arbeitsmaschine 1a,b oder der zweiten Arbeitsmaschine 1c - zugeordnete Bedienvorrichtung 17a-c umfasst. Auf diese Weise kann die für die Übertragung erforderliche Funktionalität auf die Bedienvorrichtungen 17a-c verlagert werden. Auf diese Weise kann das vorschlagsgemäße Verfahren auch für Arbeitsmaschinen 1a-c eingesetzt werden, welche ohne diese externe Bedienvorrichtung 17a-c keine oder keine ausreichende Möglichkeit zur drahtlosen Kommunikation aufweisen.

Eine bevorzugte Ausführungsform sieht vor, dass die Bedienvorrichtungen 17a-c eine Eingabe, Übermittlung und Anzeige von Benutzernachrichten zwischen den Arbeitsmaschinen 1a-c der Arbeitsgruppe 4 zugeordneten Bedienvorrichtungen 17a-c bereitstellen. Auf diese Weise können auch Benutzer bzw. Fahrer der Arbeitsmaschinen 1a-c einer Arbeitsgruppe 4 untereinander kommunizieren. Dabei kann durch das beschriebene System sichergestellt werden, dass alle und insbesondere nur diejenigen Bedienvorrichtungen 17a-c, welche den Arbeitsmaschinen 1a-c der Arbeitsgruppe 4 zugeordnet sind, diese Benutzernachrichten empfangen. Grundsätzlich kann dabei die Übermittlung der Benutzernachrichten durch eine direkte Übertragung zwischen den Bedienvorrichtungen 17a-c erfolgen. Bevorzugt ist jedoch, dass die Übermittlung der Benutzernachrichten durch den Server 10 vermittelt wird. Mit anderen Worten verläuft die Übermittlung der Benutzernachrichten zwischen den Bedienvorrichtungen 17a-c und dem Server 10.

Eine weitere bevorzugte Ausführungsform ist dadurch gekennzeichnet, dass die Übertragung eines Teildatensatzes 11a,b an eine Arbeitsmaschine 1a-c einer Arbeitsgruppe 4 eine Übertragung an eine Hauptrechenvorrichtung 18a-c der jeweiligen Arbeitsmaschine 1a-c umfasst. Es kann also die Übertragung des ersten Teildatensatzes 11a an die erste Arbeitsmaschine 1a,b der Arbeitsgruppe 4 eine Übertragung des ersten Teildatensatzes 11a an die Hauptrechenvorrichtung 18a,b der ersten Arbeitsmaschine 1a,b umfassen. Entsprechend kann die Übertragung des zweiten Teildatensatzes 11b an die zweite Arbeitsmaschine 1c der Arbeitsgruppe 4 eine Übertragung des zweiten Teildatensatzes 11b an die Hauptrechenvorrichtung 18c der zweiten Arbeitsmaschine 1c umfassen.

Diese jeweilige Übertragung kann dabei gemäß einer Variante direkt von dem Server 10 an die jeweilige Hauptrechenvorrichtung 18a-c erfolgen. Bevorzugt ist jedoch, dass die Übertragung an die Hauptrechenvorrichtung 18a-c die Übertragung von dem Server 10 an die jeweilige der Arbeitsmaschine 1a-c der Hauptrechenvorrichtung 18a-c zugeordnete Bedienvorrichtung 17a-c und die Übertragung von dieser Bedienvorrichtung 17a-c an die Hauptrechenvorrichtung 18a-c umfasst. Mit anderen Worten erfolgt dann die Übertragung an die jeweilige Hauptrechenvorrichtung 18a-c mittelbar über die entsprechende Bedienvorrichtung 17a-c.

Eine bevorzugte Ausführungsform ist dadurch gekennzeichnet, dass eine gemeinsame Prozesskette die erste Bearbeitungsart und die zweite Bearbeitungsart umfasst. Das ist - wie beim dargestellten Ausführungsbeispiel - dann der Fall, wenn die zweite Bearbeitungsart das Produkt bzw. "Erzeugnis" der ersten Bearbeitungsart weiterverarbeitet. Speziell ist also bevorzugt, dass die zweite Bearbeitungsart auf einem Ergebnis der ersten Bearbeitungsart aufsetzt und insbesondere, dass die zweite Bearbeitungsart der ersten Bearbeitungsart auf dem Feld 5 nachfolgt.

Eine weitere bevorzugte Ausführungsform ist dazu eingerichtet, bei der Bearbeitung dynamisch anfallende Daten an die jeweils anderen Arbeitsmaschinen 1a-c der Arbeitsgruppe 4 zu übertragen, sodass diese bei der Bearbeitung durch diese Arbeitsmaschinen 1a-c ebenfalls berücksichtigt werden können.

Diese Ausführungsform ist dadurch gekennzeichnet, dass die erste Arbeitsmaschine 1a,b bei der Bearbeitung des Feldes 5 Bearbeitungsdaten erzeugt, dass die Bearbeitungsdaten an die zweite Arbeitsmaschine 1c übertragen werden und dass bei der zweiten Arbeitsmaschine 1c die Einstellung der zweiten Bearbeitungsart auf den Bearbeitungsdaten basiert. So kann etwa die nachbearbeitende zweite Arbeitsmaschine 1c auf ein aktuelles Prozessvolumen, z. B. also ein Erntegutvolumen, der ersten Arbeitsmaschine 1a,b vorab eingestellt werden. Es kann auch eine Sensorkalibrierung bei der bearbeitungstechnisch vorgelagerten Arbeitsmaschine 1a-c basierend auf diesen Bearbeitungsdaten erfolgen. Hier kann alternativ oder zusätzlich vorgesehen sein, dass die zweite Arbeitsmaschine 1c bei der Bearbeitung des Feldes 5 Bearbeitungsdaten erzeugt, dass die Bearbeitungsdaten an die erste Arbeitsmaschine 1a,b übertragen werden und dass bei der ersten Arbeitsmaschine 1a,b die Einstellung der ersten Bearbeitungsart auf den Bearbeitungsdaten basiert. Hier ist weiter bevorzugt, dass die Übertragung der Bearbeitungsdaten durch den Server 10 vermittelt wird. Bevorzugt ist auch, dass die Bearbeitungsdaten als Messdaten der Bearbeitung und/oder von Erntegut und/oder von Umgebungswerten erzeugt werden. Unter Messdaten der Bearbeitung können etwa Motorleistungswerte verstanden werden. Messdaten von Erntegut betreffen Gewicht, Volumen, Feuchtigkeit, und eine Güte wie z. B. Kornbruchanteil des Ernteguts. Messdaten der Umgebungswerte sind entweder Temperatur, Bestandshöhe oder Feuchtigkeit auf dem Feld 5.

Schließlich ist bevorzugt, dass der Dienstdatensatz 9 eine Berechnungsvorschrift bereitstellt, basierend auf der aus den Bearbeitungsdaten die Einstellung der zweiten Bearbeitungsart automatisch ermittelt wird. Auf diese Weise fließen die ermittelten Bearbeitungsdaten automatisch - nämlich gemäß dieser Berechnungsvorschrift - in die Einstellung der zweiten Bearbeitungsart. Bei der oben beschriebenen Variante, bei der die Bearbeitungsdaten von der zweiten Arbeitsmaschine 1c an die erste Arbeitsmaschine 1a,b übertragen werden, ist dann hier weiter bevorzugt vorgesehen, dass basierend auf der von dem Dienstdatensatz 9 bereitgestellten Berechnungsvorschrift alternativ oder zusätzlich aus den Bearbeitungsdaten die Einstellung der ersten Bearbeitungsart automatisch ermittelt wird.

### Bezugszeichenliste

- 1: Arbeitsmaschinen
- 1a,b: erste Arbeitsmaschine
- 1c: zweite Arbeitsmaschine
- 2: Mähdrescher
- 3: Traktor-Hänger
- 4: Arbeitsgruppe
- 5: Feld
- 6: Sollfahrspuren
- 7: Mobilfunknetzwerk
- 8: Silo
- 9, 9a-c: Dienstdatensatz
- 10: Server
- 11a: erster Teildatensatz
- 11b: zweiter Teildatensatz
- 12a: erstes Arbeitsorgan
- 12b: zweites Arbeitsorgan
- 13a: erste Steuervorrichtung
- 13b: zweite Steuervorrichtung
- 14: Client
- 14a: Betriebsrechner
- 15: Arbeitsbereich
- 16: Zugang
- 17a-c: Bedienvorrichtung
- 18a-c: Hauptrechenvorrichtung

## Patentansprüche

1. Verfahren zum Betreiben von landwirtschaftlichen Arbeitsmaschinen (1a-c), wobei eine Arbeitsgruppe (4) von landwirtschaftlichen Arbeitsmaschinen (1a-c) zur zusammenhängenden Bearbeitung eines Feldes (5) definiert wird, wobei die Bearbeitung des Feldes durch die Arbeitsmaschinen der Arbeitsgruppe in einem funktionalen Zusammenhang steht, dass die Arbeitsgruppe (4) eine erste Arbeitsmaschine (1a,b) für eine erste Bearbeitungsart des Feldes (5) und eine zweite Arbeitsmaschine (1c) für eine zweite Bearbeitungsart des Feldes (5) aufweist, dass ein Dienstdatensatz (9) zur Einstellung der Bearbeitung des Feldes (5) ausgewählt wird, welcher Dienstdatensatz (9) auf einem von den Arbeitsmaschinen (1a-c) entfernten Server (10) hinterlegt ist, dass ein erster Teildatensatz (11a) des Dienstdatensatzes (9) zur Einstellung der ersten Bearbeitungsart an die erste Arbeitsmaschine (1a,b) drahtlos übertragen wird, dass ein zweiter Teildatensatz (11b) des Dienstdatensatzes (9) zur Einstellung der zweiten Bearbeitungsart an die zweite Arbeitsmaschine (1c) drahtlos übertragen wird, wobei der Server (10) für einen Client (14) eine vorzugsweise internetbasierte Schnittstelle zur Definition der Arbeitsgruppe (4) und zur Auswahl des Dienstdatensatzes (9) bereitstellt und auf dem Server (10) eine Vielzahl von unterschiedlichen Dienstdatensätzen (9, 9a-c) hinterlegt ist und dass der Server (10) für den Client (14) einen virtuellen Arbeitsbereich (15) zur, vorzugsweise internetbasierten, Anzeige des ausgewählten Dienstdatensatzes (9) bereitstellt, und vorzugsweise, dass der Server (10) für den Client (14) einen, insbesondere internetbasierten, Zugang (16) zu dem virtuellen Arbeitsbereich (15) bereitstellt, welcher Zugang (16) den Arbeitsmaschinen (1a-c) der Arbeitsgruppe (4) zugeordnet ist.

2. Verfahren nach Anspruch 1, **dadurch gekennzeichnet, dass** die erste Arbeitsmaschine (1a,b) für die erste Bearbeitungsart ein erstes Arbeitsorgan (12a) aufweist, dass der erste Teildatensatz (11a) erste Arbeitsparameter für das erste Arbeitsorgan (12a) aufweist, dass die zweite Arbeitsmaschine (1c) für die zweite Bearbeitungsart ein zweites Arbeitsorgan (12b) aufweist und dass der zweite Teildatensatz (11b) zweite Arbeitsparameter für das zweite Arbeitsorgan (12b) aufweist, vorzugsweise, dass die erste Bearbeitungsart verschieden zu der zweiten Bearbeitungsart ist.

3. Verfahren nach Anspruch 2, **dadurch gekennzeichnet, dass** die erste Arbeitsmaschine (1a,b) eine erste Steuervorrichtung (13a) zur Ansteuerung des ersten Arbeitsorgans (12a) und die zweite Arbeitsmaschine (1c) eine zweite Steuervorrichtung (13b) zur Ansteuerung des zweiten Arbeitsorgans (12b) aufweist und dass der erste Teildatensatz (11a) zumindest teilweise auf der ersten Steuervorrichtung (13a) zur Ansteuerung des ersten Arbeitsorgans (12a) und der zweite Teildatensatz (11b) zumindest teilweise auf der zweiten Steuervorrichtung (13b) zur Ansteuerung des zweiten Arbeitsorgans (12b) abgespeichert wird.

4. Verfahren nach einem der Ansprüche 1 bis 3, **dadurch gekennzeichnet, dass** der erste Teildatensatz (11a) ein erstes ablauffähiges Datenverarbeitungsprogramm, vorzugsweise zum Ablauf auf der ersten Steuervorrichtung (13a), zur Einstellung der ersten Bearbeitungsart und dass der zweite Teildatensatz (11b) ein zweites ablauffähiges Datenverarbeitungsprogramm, vorzugsweise zum Ablauf auf der zweiten Steuervorrichtung (13b), zur Einstellung der zweiten Bearbeitungsart umfasst.

5. . Verfahren nach einem der Ansprüche 1 bis 4, **dadurch gekennzeichnet, dass** eine zyklische Überprüfung erfolgt, ob der Dienstdatensatz (9) ausgewählt wurde und der erste Teildatensatz (11a) an die erste Arbeitsmaschine (6a, b) oder der zweite Teildatensatz (11b) an die zweite Arbeitsmaschine (7) zu übertragen ist und dass basierend auf der Überprüfung die Übertragung des ersten Teildatensatzes (11a) oder des zweiten Teildatensatzes (11b) erfolgt.

6. . Verfahren nach einem der Ansprüche 1 bis 5, **dadurch gekennzeichnet, dass** der Auswahl des Dienstdatensatzes (9) eine Gültigkeitsdauer zugeordnet ist und dass nach Ablauf der Gültigkeitsdauer der erste Teildatensatz (11a) und der zweite Teildatensatz (11b) des Dienstdatensatzes (9) inaktiv geschaltet werden.

7. Verfahren nach einem der Ansprüche 1 bis 6, **dadurch gekennzeichnet, dass** den Arbeitsmaschinen (1a-c) der Arbeitsgruppe (4) jeweils eine, vorzugsweise tragbare, Bedienvorrichtung (17a-c) zur Visualisierung eines an die Arbeitsmaschine (1a-c) übertragenen Teildatensatzes (11a,b), vorzugsweise zur Visualisierung des Arbeitsbereiches (15) über den Zugang (16), zugeordnet ist, insbesondere, dass die Bedienvorrichtungen (17a-c) mit einer Hauptrechenvorrichtung (18a-c) der jeweiligen Arbeitsmaschine (1a-c) und mit dem Server (10) datentechnisch verbunden sind.

8. Verfahren nach Anspruch 7, **dadurch gekennzeichnet, dass** die Übertragung eines der Teildatensätze (11a,b) an eine der Arbeitsmaschinen (1a-c) der Arbeitsgruppe (4) eine Übertragung von dem Server (10) an die der jeweiligen Arbeitsmaschine (1a-c) zugeordnete Bedienvorrichtung (17a-c) umfasst.

9. Verfahren nach Anspruch 7 oder 8, **dadurch gekennzeichnet, dass** die Bedienvorrichtungen (17a-c) eine Eingabe, Übermittlung und Anzeige von Benutzernachrichten zwischen den den Arbeitmaschinen (1a-c) der Arbeitsgruppe (4) zugeordneten Bedienvorrichtungen (17a-c) bereitstellen, vorzugsweise, dass die Übermittlung der Benutzernachrichten durch den Server (10) vermittelt wird.

10. Verfahren nach einem der Ansprüche 1 bis 9 **dadurch gekennzeichnet, dass** die Übertragung eines der Datensätze (11a,b) an eine der Arbeitsmaschinen (1a-c) der Arbeitsgruppe (4) eine Übertragung an eine Hauptrechenvorrichtung (18a-c) der jeweiligen Arbeitsmaschine (1a-c) umfasst, vorzugsweise, dass die Übertragung an die Hauptrechenvorrichtung (18a-c) die Übertragung von dem Server (10) an die jeweilige der Arbeitsmaschine (1a-c) der Hauptrechenvorrichtung (18a-c) zugeordnete Bedienvorrichtung (17a-c) und die Übertragung von dieser Bedienvorrichtung (17a-c) an die Hauptrechenvorrichtung (18a-c) umfasst.

11. Verfahren nach einem der Ansprüche 1 bis 10, **dadurch gekennzeichnet, dass** eine gemeinsame Prozesskette die erste Bearbeitungsart und die zweite Bearbeitungsart umfasst, vorzugsweise, dass die zweite Bearbeitungsart auf einem Ergebnis der ersten Bearbeitungsart aufsetzt, insbesondere, dass die zweite Bearbeitungsart der ersten Bearbeitungsart auf dem Feld (5) nachfolgt.

12. Verfahren nach einem der Ansprüche 1 bis 11, **dadurch gekennzeichnet, dass** die erste Arbeitsmaschine (1a,b) bei der Bearbeitung des Feldes (5) Bearbeitungsdaten erzeugt, dass die Bearbeitungsdaten an die zweite Arbeitsmaschine (1c) übertragen werden und dass bei der zweiten Arbeitsmaschine (1c) die Einstellung der zweiten Bearbeitungsart auf den Bearbeitungsdaten basiert, insbesondere, dass die Übertragung der Bearbeitungsdaten durch den Server (10) vermittelt wird, vorzugsweise, dass die Bearbeitungsdaten als Messdaten der Bearbeitung und/oder von Erntegut und/oder von Umgebungswerten erzeugt werden.

13. Verfahren nach Anspruch 12, **dadurch gekennzeichnet, dass** der Dienstdatensatz (9) eine Berechnungsvorschrift bereitstellt, basierend auf der aus den Bearbeitungsdaten die Einstellung der zweiten Bearbeitungsart automatisch ermittelt wird.

## Claims

1. A method of operating agricultural working machines (1a-c), wherein a working group (4) of agricultural working machines (1a-c) is defined for interrelated working of a field (5), wherein working of the field by the working machines of the working group is in a functional relationship, the working group (4) has a first working machine (1a,b) for a first kind of working of the field (5) and a second working machine (1c) for a second kind of working of the field (5), a service data set (9) is selected for setting the working of the field (5), which service data set (9) is stored on a server (10) remote from the working machines (1a-c),a first partial data set (11a) of the service data set (9) for setting the first kind of working is wirelessly transmitted to the first working machine (1a,b), a second partial data set (11b) of the service data set (9) for setting the second kind of working is wirelessly transmitted to the second working machine (1c), wherein the server (10) provides for a client (14) a preferably Internet-based interface for definition of the working group (4) and for selection of the service data set (9) and a plurality of different service data sets (9, 9a-c) is stored on the server (10) and provides for the client (14) a virtual working region (15) for preferably Internet-based display of the selected data set (9) and preferably the server (10) provides for the client (14) an in particular Internet-based access (16) to the virtual working region (15), which access (16) is associated with the working machines (1a-c) of the working group (4).

2. A method according to claim 1 **characterised in that** the first working machine (1a,b) has a first working member (12a) for the first kind of working, the first partial data set (11a) has first working parameters for the first working member (12a), the second working machine (1c) has a second working member (12b) for the second kind of working, and the second partial data set (11b) has second working parameters for the second working member (12b), and preferably the first kind of working is different from the second kind of working.

3. A method according to claim 2 **characterised in that** the first working machine (1a,b) has a first control device (13a) for actuation of the first working member (12a) and the second working machine (1c) has a second control device (13b) for actuation of the second working member (12b) and the first partial data set (11a) is stored at least partially on the first control device (13a) for actuation of the first working member (12a) and the second partial data set (11b) is stored at least partially on the second control device (13b) for actuation of the second working member (12b).

4. A method according to one of claims 1 to 3 **characterised in that** the first partial data set (11a) includes a first executable data processing program, preferably to run on the first control device (13a), for setting the first kind of working and that the second partial data set (11b) includes a second executable data processing program, preferably to run on the second control device (13b) for setting the second kind of working.

5. A method according to one of claims 1 to 4 **characterised in that** a cyclic check takes place as to whether the service data set (9) was selected and the first partial data set (11a) is to be transmitted to the first working machine (6a,b) or the second partial data set (11b) is to be transmitted to the second working machine (7) and based on the check the first partial data set (11a) or the second partial data set (11b) is transmitted.

6. A method according to one of claims 1 to 5 **characterised in that** a validity period is associated with the selection of the service data set (9) and after expiry of the validity period the first partial data set (11a) and the second partial data set (11b) of the service data set (9) are switched inactive.

7. A method according to one of claims 1 to 6 **characterised in that** associated with the working machines (1a-c) of the working group (4) is a respective preferably portable operating device (17a-c) for visualising a partial data set (11a,b) transmitted to the working machine (1a-c), preferably for visualising the working region (15) by way of the access (16), and in particular the operating devices (17a-c) are connected in data-technology relationship to a main computing apparatus (18a-c) of the respective working machine (1a-c) and to the server (10).

8. A method according to claim 7 **characterised in that** transmission of one of the partial data sets (11a,b) to one of the working machines (1a-c) of the working group (4) includes transmission from the server (10) to the operating device (17a-c) associated with the respective working machine (1a-c).

9. A method according to claim 7 or claim 8 **characterised in that** the operating devices (17a-c) provide input, transmission and display of user messages between the operating devices (17a-c) associated with the working machines (1a-c) of the working group (4), and preferably transmission of the user messages is implemented by the server (10).

10. A method according to one of claims 1 to 9 **characterised in that** transmission of one of the data sets (11a,b) to one of the working machines (1a-c) of the working group (4) includes transmission to a main computing apparatus (18a-c) of the respective working machine (1a-c), and preferably transmission to the main computing apparatus (18a-c) includes transmission from the server (10) to the respective operating device (17a-c) associated with the working machine (1a-c) of the main computing apparatus (18a-c) and transmission from said operating device (17a-c) to the main computing apparatus (18a-c).

11. A method according to one of claims 1 to 10 **characterised in that** a common process chain includes the first kind of working and the second kind of working, and preferably the second kind of working is based on a result of the first kind of working, and in particular the second kind of working follows the first kind of working on the field (5).

12. A method according to one of claims 1 to 11 **characterised in that** the first working machine (1a,b) generates working data when working the field (5), the working data are transmitted to the second working machine (1c) and at the second working machine (1c) setting of the second kind of working is based on the working data, in particular transmission of the working data is implemented by the server (10), and preferably the working data are generated as measurement data of the working operation and/or crop material and/or environmental values.

13. A method according to claim 12 **characterised in that** the service data set (9) provides a calculation rule, based on which setting of the second kind of working is automatically determined from the working data.

## Revendications

1. Procédé d'exploitation de machines de travail agricoles (1a-c), un groupe de travail (4) de machines de travail agricoles (1a-c) étant défini en vue d'un traitement cohérent d'un champ (5), le traitement du champ par les machines de travail du groupe de travail se trouvant dans un rapport fonctionnel, le groupe de travail (4) comportant une première machine de travail (1a,b) pour un premier type de traitement du champ (5) et une seconde machine de travail (1c) pour un second type de traitement du champ (5), un ensemble de données de service (9) étant sélectionné pour instaurer le traitement du champ (5), lequel ensemble de données de service (9) est enregistré sur un serveur (10) distant des machines de travail (1a-c), un premier ensemble de données partiel (11a) de l'ensemble de données de service (9) étant transmis sans fil à la première machine de travail (1a,b) pour instaurer le premier type de traitement, un second ensemble de données partiel (11b) de l'ensemble de données de service (9) étant transmis sans fil à la seconde machine de travail (1c) pour instaurer le second type de traitement, le serveur (10) fournissant pour un client (14) une interface, de préférence basée sur Internet, afin de définir le groupe de travail (4) et de sélectionner l'ensemble de données de service (9), et sur le serveur (10) étant enregistrée une pluralité d'ensembles de données de service différentes (9, 9a-c), et le serveur (10) fournissant pour le client (14) un accès, en particulier basé sur Internet, (16) à la zone de travail virtuelle (15), ledit accès (16) étant associé aux machines de travail (1a-c) du groupe de travail (4) .

2. Procédé selon la revendication 1, **caractérisé en ce que** la machine de travail (1a,b) pour le premier type de traitement comporte un premier organe de travail (12a), **en ce que** le premier ensemble de données partiel (11a) comporte des premiers paramètres de travail pour le premier organe de travail (12a), **en ce que** la seconde machine de travail (1c) pour le second type de traitement comporte un second organe de travail (12b), et **en ce que** le second ensemble de données partiel (11b) comporte des seconds paramètres de travail pour le second organe de travail (12b), de préférence **en ce que** le premier type de traitement est différent du second type de traitement.

3. Procédé selon la revendication 2, **caractérisé en ce que** la première machine de travail (1a,b) comporte un premier dispositif de commande (13a) pour commander le premier organe de travail (12a) et la seconde machine de travail (1c) comporte un second dispositif de commande (13b) pour commander le second organe de travail (12b), et **en ce que** le premier ensemble de données partiel (11a) est stocké au moins en partie sur le premier dispositif de commande (13a) pour commander le premier organe de travail (12a) et le second ensemble de données partiel (11b) est stocké au moins en partie sur le second dispositif de commande (13b) pour commander le second organe de travail (12b) .

4. Procédé selon une des revendications 1 à 3, **caractérisé en ce que** le premier ensemble de données partiel (11a) inclut un premier programme exécutable de traitement de données, de préférence à exécuter sur le premier dispositif de commande (13a) pour instaurer le premier type de traitement, et **en ce que** le second ensemble de données partiel (11b) inclut un second programme exécutable de traitement de données, de préférence à exécuter sur le second dispositif de commande (13b) pour instaurer le second type de traitement.

5. Procédé selon une des revendications 1 à 4, **caractérisé en ce qu'**un contrôle cyclique est effectué pour savoir si l'ensemble de données de service (9) a été sélectionné et si le premier ensemble de données partiel (11a) doit être transféré à la première machine de travail (6a,b) ou si le second ensemble de données partiel (11b) doit être transféré à la seconde machine de travail (7), et **en ce que** la transmission du premier ensemble de données partiel (11a) ou du second ensemble de données partiel (11b) s'effectue sur la base du contrôle.

6. Procédé selon une des revendications 1 à 5, **caractérisé en ce qu'**à la sélection de l'ensemble de données de service (9) est associée une durée de validité, et **en ce qu'**après expiration de la durée de validité, le premier ensemble de données partiel (11a) et le second ensemble de données partiel (11b) de l'ensemble de données de service (9) sont inactivés.

7. Procédé selon une des revendications 1 à 6, **caractérisé en ce qu'**aux machines de travail (1a-c) du groupe de travail (4) est associé respectivement un dispositif d'actionnement (17a-c) pour visualiser un ensemble de données partiel (11a,b) transmis à la machine de travail (1a-c), de préférence pour visualiser la zone de travail (15) par l'intermédiaire de l'accès (16), en particulier **en ce que** les dispositifs d'actionnement (17a-c) sont reliés sur le plan des données avec un dispositif de calcul principal (18a-c) de la machine de travail respective (1a-c) et avec le serveur (10).

8. Procédé selon la revendication 7, **caractérisé en ce que** la transmission d'un des ensembles de données partiels (11a,b) à une des machines de travail (1a-c) du groupe de travail (4) inclut une transmission par le serveur (10) au dispositif d'actionnement (17a-c) associé à la machine de travail respective (1a-c).

9. Procédé selon la revendication 7 ou 8, **caractérisé en ce que** les dispositifs d'actionnement (17a-c) permettent une saisie, une transmission et un affichage de messages utilisateur entre les dispositifs d'actionnement (17a-c) associés aux machines de travail (1a-c) du groupe de travail (4), de préférence **en ce que** la transmission des messages utilisateur s'effectue par l'intermédiaire du serveur (10) .

10. Procédé selon une des revendications 1 à 9, **caractérisé en ce que** la transmission d'un des ensembles de données (11a,b) à une des machines de travail (1a-c) du groupe de travail (4) inclut une transmission à un dispositif de calcul principal (18a-c) de la machine de travail respective (1a-c), de préférence **en ce que** la transmission au dispositif de calcul principal (18a-c) inclut la transmission par le serveur (10) au dispositif d'actionnement respectif (17a-c) associé à la machine de travail (1a-c) du dispositif de calcul principal (18a-c) et la transmission par ce dispositif d'actionnement (17a-c) au dispositif de calcul principal (18a-c).

11. Procédé selon une des revendications 1 à 10, **caractérisé en ce qu'**une chaîne de processus commune inclut le premier type de traitement et le second type de traitement, de préférence **en ce que** le second type de traitement repose sur un résultat du premier type de traitement, en particulier **en ce que** le second type de traitement succède au premier type de traitement dans le champ (5).

12. Procédé selon une des revendications 1 à 11, **caractérisé en ce que**, lors du traitement du champ (5), la première machine de travail (1a,b) génère des données de traitement, **en ce que** les données de traitement sont transmises à la seconde machine de travail (1c), et **en ce que**, sur la seconde machine de travail (1c), l'instauration du second type de traitement est basée sur les données de traitement, en particulier **en ce que** la transmission des données de traitement s'effectue par l'intermédiaire du serveur (10), de préférence **en ce que** les données de traitement sont générées en tant que données de mesure du traitement et/ou du produit récolté et/ou de valeurs environnementales.

13. Procédé selon la revendication 12, **caractérisé en ce que** l'ensemble de données de service (9) fournit une règle de calcul, sur la base de laquelle l'instauration du second type de traitement est déterminée automatiquement à partir des données de traitement.
